# EUROPEAN PATENT SPECIFICATION

(11) **EP 2 685 755 B1**
(45) Date of publication and mention of the grant of the patent: **09.12.2015**
(21) Application number: 12305834.9
(22) Date of filing: 12.07.2012
(51) Int. Cl.: H04W 16/28, H04L 5/00, H04W 64/00, H04B 7/06

(54) **Regional classification of a mobile terminal within a cell**
Örtlich begrenzte Klassifizierung eines mobilen Endgeräts innerhalb einer Zelle
Classification régionale d'un terminal mobile à l'intérieur d'une cellule

(43) Date of publication of application: 15.01.2014
(73) Proprietor: ALCATEL LUCENT, 92100 Boulogne-Billancourt (FR)
(72) Inventor: Jeschke, Michael, 70184 Stuttgart (DE); Sehier, Philippe, 78100 St Germain en Laye (FR)
(74) Representative: Knecht, Ulrich Karl

(56) References cited:
- US-A1- 2004 185 783
- US-A1- 2005 059 403
- US-A1- 2011 080 884
- US-A1- 2012 052 835
- "3rd Generation Partnership Project; Technical Specification Group Core Network; Numbering, addressing and identification (Release 6)", 3GPP STANDARD; 3GPP TS 23.003, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.0.0, 1 September 2003 (2003-09-01), pages 1-38, XP050361733,

## Description

Embodiments of the present invention generally relate to wireless communication systems, and, in particular, to apparatuses, methods and computer programs that enable a regional classification of a mobile terminal within a cell of a wireless or cellular communication system.

### Background

Demands for higher data rates for mobile services are steadily increasing. At the same time modem mobile communication systems, as 3^{rd} Generation (3G) systems, such as the Universal Mobile Telecommunications System (UMTS), and 4^{th} Generation (4G) systems, such as Long-Term Evolution (LTE), provide enhanced technologies, which enable higher spectral efficiencies and allow for higher data rates and cell capacities. Examples for that can be found in US 2004/185783 A1 and US 2005/059403 A1.

In addition to wider bandwidth, LTE-Advanced, which has been specified as part of LTE Release 10, is expected to further provide higher data rates and improved system performance. This is e.g. done by further extending the LTE support for multi-antenna transmission compared to the first release of LTE. For the downlink (DL), i.e. the transmission direction from a base station to a mobile terminal, up to eight transmission layers together with an enhanced reference-signal structure can be transmitted using an up to 8x8 antenna configuration, i.e. eight TX-antennas at the base station and eight RX-antennas at the mobile terminal, which may also be referred to as User Equipment (UE) according to 3^{rd} Generation Partnership Project (3GPP) specifications.

The types of DL reference signals defined in LTE Release 10 comprise cell-specific reference signals (CRS), Multicast-Broadcast Single Frequency Network (MBSFN) reference signals, UE-specific reference signals (DM-RS), positioning reference signals (PRS), and Channel State Information (CSI) reference signals (CSI-RS). Cell-specific reference signals are transmitted using different Downlink antenna ports of a base station transceiver and may be used for both demodulation and channel measurement purpose. Thereby a base station's antenna port maps to one or more (combined) physical antennas and may be defined by the presence of an antenna port specific reference signal. That is to say, an antenna port specific reference signal may be mapped or associated to an associated logical antenna, wherein said logical antenna may be realized by one or more physical antennas or antenna arrays comprising a plurality of vertically or horizontally aligned antenna elements. For example, the individual antenna elements of an array may be spaced λ/2 apart, wherein λ denotes the wavelength corresponding to a system carrier frequency *f_{c}* of the wireless signal.

LTE Release 10 therefore introduces extensive support of UE-specific DM-RS for demodulation of up to eight transmission layers. In addition, feedback of CSI is based on a separate set of reference signals - CSI-RS. CSI-RS pilot patterns are relatively sparse in frequency but typically regularly transmitted via each physical or virtualized antenna port and are used for CSI measurement purposes only, while the UE-specific DM-RS pilot patterns are denser in frequency but only transmitted when data is transmitted on the corresponding layer. Separating the reference-signal structures supporting demodulation and channel-state estimation helps to reduce reference-signal overhead, especially for high degrees of spatial multiplexing, and allows for implementation of various beamforming schemes.

According to LTE Release 10 a base station may be configured for one, two, four or eight antenna ports (port 15 up to port 22 in LTE numbering scheme) on which it may send the CSI reference signals. An associated UE may make channel measurements and provide CSI feedback information to the base station in the form of lookup-table indices, such as the Channel Quality Indicator (CQI), i.e. a measure of the signal strength received from the CSI, or the Pre-coding Matrix Indicator (PMI). Thereby LTE Release 10 typically assumes that all base station antenna ports used for CSI-RS have similar antenna radiation patterns.

### Summary

Embodiments of the present invention may be based on the finding that a wireless communication system's base station or radio cell may be equipped with an antenna system comprising active or passive antennas, and wherein the antenna system is set up to cover essentially complementary cell areas in the spatial domain. One reason for having such an arrangement may be to improve downlink cell capacity and coverage by reducing inter-cell interference and by improving link budget to mobile users no matter in what spatial part (e.g. center or edge) of the cell they are located, while keeping the number of additional signal lines between antenna and base station/modem board limited and also limiting the extra effort for a Layer 2 scheduler. Thereby the antenna system setup could be vertical and/or horizontal, i.e., perform cell area specific beamforming in the vertical and/or horizontal direction. Without loss of generality a vertical antenna system setup will be exemplarily assumed throughout the remainder of this specification.

For example, a first (logical or physical) antenna (or antenna array) may be used having a first static antenna directivity pattern with a low downtilt and a narrow vertical beam, thus having a high gain and pointing towards the cell boundary. A second (logical or physical) antenna (or antenna array) may be used having a second static antenna directivity pattern with a greater vertical downtilt (i.e. more tilt towards ground) and a wider beam, thus providing better coverage in the inner part of the cell and creating less interference towards neighbor cells. The first and the second antenna directivity patterns are essentially static and cell area specific. In other words, the first and the second antenna directivity patterns are essentially fixed and not user-specific. Thereby each logical antenna (comprising one or more physical antennas), which is associated to the first or the second antenna directivity pattern, can be a system of multiple antenna columns, e.g. a system of one or two or four cross-polarized (X-pol) columns, as is typically assumed in 3GPP standardization and deployed by mobile network operators. In general, a first logical antenna provides the first antenna directivity pattern, while a second logical antenna provides the second antenna directivity pattern. A logical antenna may be made up of one or more physical antennas or antenna arrays.

For example, the two mentioned directivity patterns, i.e. the one with lower and the one with greater downtilt, may either be realized by two physically separate passive antennas, possibly each with Remote Electrical Tilt (RET) capability to adjust the downtilt. Also, they may be realized by different virtual or logical antennas, i.e. antenna directivity patterns or beams, of the same physical antenna, whereas in the latter case the physical antenna system may comprise an array of several (e.g. two to twelve) vertically lined-up antenna elements with multiple (e.g. two to twelve) individual Power Amplifiers (PAs) and may therefore be referred to as an Adaptive Antenna Array (AAA). In either case, the functionally is similar, therefore it is not crucial to differentiate whether the first and the second antenna beams or antenna directivity patterns are realized by different physical antennas or by one AAA with different antenna weight coefficients, respectively. In either case, the present specification may also refer to "outer beam" and "inner beam" in order to refer to the different beam directions, and refer to two (logical/functional) antennas or antenna systems, even if it is realized by just one AAA system.

An Adaptive Antenna Array (AAA) or an adaptive antenna array processor may be regarded as a functional entity that may comprise a digital interface on one side. This digital interface may, for example, be the so-called fiber-based Common Public Radio Interface (CPRI), which defines an internal digital interface of base stations between Radio Equipment Controllers (REC) to local or remote radio units, also known as Radio Equipment (RE). On the other end, the adaptive antenna array processor may also comprise a Radio Frequency (RF) interface to or from RF components, such as the individual antennas or antenna elements. In downlink (DL), i.e. the direction from a base station to a mobile terminal, an adaptive antenna array processor may receive digital In-phase (I) and Quadrature (Q) baseband samples, e.g. via CPRI from a modem board of the base station, which may also be referred to as NodeB or eNodeB according to the 3GPP terminology. The received I/Q baseband samples of the digital baseband signal may be processed in some way in the digital baseband domain, typically by applying complex valued beam forming weight coefficients, which may be written in vector-form, to the digital baseband signal. Finally, the adaptive antenna array processor may perform a Digital-to-Analogue (D/A) conversion and up-conversion or up-mixing of the weighted signal to the system carrier frequency per antenna element, each of which may be driven by a dedicated PA.

LTE Release 10 provides the so-called downlink Transmission Mode 9 (TM9), which means that each mobile terminal can receive its downlink signal carrying user plane data with its own dedicated user-specific demodulation reference signals (DM-RS) for channel estimation and data demodulation. That is to say, the user plane signal (PDSCH = Physical Downlink Shared Channel) can be sent on either the first (inner) antenna directivity pattern or the second (outer) antenna directivity pattern, selectively for each user, depending on its location (e.g. cell center or cell edge). For this purpose a base station may assign at least one first antenna signal interface to the first antenna directivity pattern and at least one second antenna signal interface to the second antenna directivity pattern. Thereby the first antenna signal interface serves for sending/receiving first cell area specific user and control data, while the second antenna signal interface serves for sending/receiving second cell area specific user and control data, wherein the first and second cell area specific user and control data are typically different from each other. Thereby an antenna signal interface may be understood as an interface of I/Q signal samples to/from the antenna system. There may be N such interfaces per first antenna directivity pattern and second antenna directivity pattern respectively (*N* = 2, 4 or 8 in LTE Rel-10). Note that an antenna signal interface is not to be confused with the notion of an antenna port. In fact, in the sense of this specification, an antenna port may sometimes be served by the antenna signal interface for the first antenna directivity pattern, and sometimes by the antenna signal interface for the second antenna directivity pattern. Hence, an antenna port is different from an antenna signal interface between modem and antenna system, but both may be well-defined. Conceptually, an antenna port is an interface between antenna hardware (e.g. a set of radiating dipoles) and the medium of EM-wave propagation (i.e. air or vacuum), and typically each antenna port has its own reference signal associated to it to allow for channel estimation by the receiver. On the other hand, the antenna signal interface is a digital (or analog) interface between modem (or base station) and antenna system. In fact, each antenna signal interface is in the end also mapped to a certain RF-signal (electro-magnetic wave) radiation characteristic (which can be TX or RX), due to the way how the antenna system is built. Nevertheless, it is a different concept than antenna port - e.g. a mobile terminal is always aware of the notion of antenna ports (and their corresponding reference signals), but it is never aware of the antenna signal interfaces. The antenna signal interfaces are just a means of realizing LTE antenna ports, by appropriate mappings and/or combinations. Since within each beam (inner and outer) the full horizontal resolution, as provided by the LTE standard, may be available, the system can take unrestricted benefit from all the range or capacity performance features provided by the LTE standard (MIMO), whereas the advantages of exploiting the vertical dimension comes on top.

It is a further finding of embodiments that, in order to take maximum benefit of the scheme described, it is desirable that a base station is able to classify reliably for each mobile terminal whether it is located in the first (e.g. inner) or second (e.g. outer) beam of the cell, i.e., whether it is located in the first (e.g. inner) or second (e.g. outer) region of the cell.

For this purpose it is provided, according to a first aspect, an apparatus for a base station serving a radio cell of a wireless communication system. The base station may be coupled to an antenna system which is operable to provide a first antenna directivity pattern for a first region of the cell, also referred to as first beam. The antenna system is further operable to provide a second antenna directivity pattern for a second region of the cell, also referred to as second beam. The first antenna directivity pattern and the second antenna directivity pattern are both associated to said cell. That is to say, the first and the second antenna directivity pattern relate to the same cell ID. According to embodiments the apparatus comprises a transceiver which is operable to transmit/receive a first signal to/from a mobile terminal associated to the cell via the first antenna directivity pattern and to transmit/receive a second signal to/from the mobile terminal via the second antenna directivity pattern. The apparatus further comprises a classifier which is operable to classify the mobile terminal as to whether the mobile terminal may be associated to the first region of the cell or whether the mobile terminal may be associated to the second region of the cell, based on a wireless channel evaluation using the first and the second signal.

The apparatus may be comprised by or be coupled to a base station transceiver, according to embodiments. That is to say, the apparatus may be directly co-located with a base station in some embodiments, while in other embodiments the apparatus may also be located in or at another (remote) physical entity of the wireless communication system. For example, the apparatus may comprise digital and/or analog electrical circuitry for performing its tasks, such as digital baseband, transmitter and/or receiver circuitry.

Embodiments of the present invention may be in principle employed in various present and future wireless communication systems, such as, for example, wireless communication systems standardized by the 3^{rd} Generation Partnership Project (3GPP), such as the Global System for Mobile Communications (GSM), Enhanced Data rates for GSM Evolution (EDGE), GSM/EDGE Radio Access Network (GERAN), Universal Terrestrial Radio Access Network (UTRAN) or Evolved UTRAN (E-UTRAN), Long Term Evolution (LTE) or LTE-Advanced (LTE-A), or wireless communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms wireless communication system and mobile communication network may be used synonymously. Note that the concept of the present invention is not limited to the aforementioned wireless communication systems but is also applicable to other as well as future wireless communication system standards.

Furthermore, the apparatus may be deployed in or coupled to a base station transceiver. Such a base station transceiver can be located in the fixed or stationary part of the network or system. A base station transceiver may correspond to a Remote Radio Head (RRH), a transmission point, an access point, a macro cell, a small cell, a micro cell, a femto cell, a metro cell etc. A base station transceiver can be a wireless interface of a wired network, which enables transmission of radio signals in one or more RF bands to an associated User Equipment (UE) or mobile terminal. Such a radio signal may comply with radio signals as, for example, standardized by 3GPP or, generally, in line with one or more of the above listed systems. Thus, a base station may correspond to a NodeB, an eNodeB, a BTS, an access point, etc. A mobile terminal may correspond to a smartphone, a cell phone, user equipment, a laptop, a notebook, a personal computer, a Personal Digital Assistant (PDA), a Universal Serial Bus (USB) -stick, a car, etc. As mentioned before, a mobile terminal may also be referred to as User Equipment (UE) in line with the 3GPP terminology. Further, the apparatus may also be coupled to a relay station for relaying wireless signals from a base station to a mobile terminal, and vice versa.

In embodiments the antenna system may comprise a first and a second physical antenna, wherein the first physical antenna realizes the first antenna directivity pattern and wherein the second physical antenna realizes the second antenna directivity pattern. Also, the antenna system may comprise an Adaptive Antenna Array (AAA) comprising a plurality of closely-spaced antenna elements. For example, the individual antenna elements of the antenna array may be spaced essentially λ/2 apart, wherein λ denotes the wavelength corresponding to a system carrier frequency *f_{c}* of the wireless signal. Thereby the first and the second antenna directivity pattern may be realized by the application of corresponding first and second beamforming weights. Applying the first beamforming weight results in a first logical (or virtual) antenna for the first antenna directivity pattern, whereas applying the second beamforming weight results in a second logical (or virtual) antenna for the second antenna directivity pattern.

The first and the second antenna directivity pattern each comprise a main lobe facing towards different geographic cell areas. For example, the main lobe of the first antenna directivity pattern may face towards a cell center region, while the main lobe of the second antenna directivity pattern may face towards a cell border region. That is to say, the first and the second antenna directivity pattern may have different downtilts in some embodiments. The first and the second antenna directivity patterns are hence cell area specific and essentially static. That is to say, the first and the second antenna directivity patterns are not to be regarded as highly time variant and user- or UE-specifc beam patterns, but as rather time invariant beam patterns covering different regions of the same cell.

In some embodiments the base station may comprise at least two (groups of) antenna signal interfaces for (simultaneously) coupling different antenna signal interface specific signals to or from the antenna system. Here, the at least two different (groups of) antenna signal interfaces may be associated to the at least two different static and cell area specific antenna directivity patterns (also referred to as "beams"), respectively. That is to say, a first antenna signal interface may carry (first) signals which may be radiated by means of the first cell area specific antenna directivity pattern, while a second antenna signal interface may carry (second) signals which may be radiated simultaneously by means of the second, different cell area specific antenna directivity pattern. In other words, a first antenna signal interface may be coupled to a first logical antenna for the first antenna directivity pattern, while a second antenna signal interface may be coupled or associated to a second logical antenna for the second antenna directivity pattern.

Note that a particular antenna directivity or beam pattern may generally be provided by more than one physical antenna. That is to say, a base station's antenna signal interface may map to one or more physical antennas (or antenna arrays) and may, according to embodiments, be used for transmitting antenna port specific downlink reference signals. Hence, in embodiments a first reference signal may define or relate to a first antenna port, while a second reference signal may define or relate to a second antenna port. Consequently, an antenna port specific reference signal may also be mapped or associated to an associated logical antenna (or a combination thereof), wherein said logical antenna may be realized by one or more physical antennas or antenna arrays comprising a plurality of vertically or horizontally aligned antenna elements. Note that a logical antenna either corresponds to the first or the second antenna directivity pattern, while a physical antenna may well be related to both antenna directivity patterns, depending on the embodiment.

In some embodiments reference signal(s) dedicated to only a single antenna port (group) may be associated to the at least two static and cell area specific antenna directivity patterns at different, e.g. alternating, time instants. That is to say, an antenna port specific reference signal may first be transmitted using the first antenna directivity pattern and then the same reference signal (i.e. associated to the same antenna port) may be transmitted using the second antenna directivity pattern. In other words, for the transmission of reference signals the association first antenna port <--> first antenna directivity pattern, second antenna port <--> second antenna directivity pattern may be suspended in some embodiments. Instead, the same reference signal associated to a certain antenna port may be transmitted via both antenna directivity patterns, however during different time intervals.

Note that embodiments are not restricted to a single first or a single second antenna port and/or a single first and a single second antenna directivity pattern. For example, embodiments may also relate to a plurality of antenna ports (e.g. two or four) which may be associated with the first and/or the second antenna directivity pattern.

In embodiments the first and second beams or antenna directivity patterns, and hence the respective associated at least first and/or the at least second antenna signal interfaces, all serve the same cell ID, i.e., a mobile terminal does not need to perform any handover between the geographical first and second cell areas associated to the different antenna directivity patterns and does not even need to be aware of such a multi-beam setup. In other words, the at least two different antenna directivity patterns realize at least two different spatial areas in one radio cell, the at least two different spatial areas having the same cell ID. Thereby a first spatial area (e.g. cell center) may be served via an associated first antenna directivity pattern, and a second spatial area (e.g. cell edge) may be served via a second, different antenna directivity pattern.

Each logical antenna or antenna directivity pattern may have one or more separate signal connections (= "antenna signal interfaces") to the base station. For example, if the two logical antennas associated to the first and the second beam pattern are both so-called "CLA-2X" antennas (CLA="clustered linear array"), this means that each of them may have four signal lines or interfaces towards the base station, wherein these signal lines could be analog lines (e.g. coax cables) or digital lines (e.g. fiber, CPRI, etc.) carrying e.g. base band samples. For such an exemplary setup there may hence be eight signal lines altogether, four for the first antenna directivity pattern and four for the second antenna directivity pattern. Note that the number of such signal interfaces does not necessarily correspond to the antenna ports used for reference signal transmission.

The apparatus' transceiver may comprise digital and/or analog transmitter and/or receiver circuitry, such as e.g. digital baseband circuitry and/or digital/analog Intermediate Frequency (IF) or Radio Frequency (RF) transceiver parts, wherein an RF spectrum denotes a signal's actual transmission spectrum or transmission band.

The first and/or the second signals may each be downlink or uplink signals being suitable for a wireless channel evaluation of a channel affected by the first or the second antenna directivity pattern, respectively. For a rough channel power analysis the first and/or the second signal may not even be a specific predetermined reference or pilot signal, respectively. Thereby a reference signal denotes a transmitted signal, typically a pilot signal, whose signal pattern is known by the receiving party. That is to say, for downlink transmission, the pattern of a downlink reference signal is also known by the mobile terminal, while for uplink transmission, the pattern of an uplink reference signal is also known by the base station. In some embodiments, the first and the second signal may be (downlink) CSI reference signals according to the LTE Rel-10 standard, i.e., reference or pilot signals known and used by an associated mobile terminal to perform a channel state estimation of a respective wireless communication channel between the base station and the mobile terminal. As CSI a channel power, a channel coefficient's phase and/or magnitude may be estimated and potentially fed back as CQI (Channel Quality Indication), PMI (Pre-coding Matrix Indicator) and/or a RI (Rank Indication) report in some form to the base station, such that the base station may perform pre-distortion, pre-coding, or the like.

Hence, in some embodiments the apparatus' classifier may be operable to classify or decide whether the mobile terminal shall be associated to the first antenna directivity pattern serving the first cell region or whether the mobile terminal shall be associated to the second antenna directivity pattern serving the second cell region based on a feedback provided by the mobile terminal in response to the transmitted first and second reference signal, wherein different first and second reference signals may have been transmitted via a first and a second antenna port at the same time, respectively, or wherein the same reference signal may have been transmitted via a common antenna port using the first antenna directivity pattern and the second directivity pattern at different times. In other words, the classifier may decide, based on the CSI feedback, whether the mobile terminal should be served by means of the first (group of) antenna signal interface(s) (associated to the first logical antenna) or by means of the second, different (group of) antenna signal interface(s) (associated to the second logical antenna). By which of the at least two (groups of) antenna signal interface(s) the mobile terminal is to be served is dependent on the mobile terminal's geographic location. For example, if it presently is located in the cell center area the mobile terminal may be associated to the first antenna signal interface (group) and, hence, the first antenna directivity pattern. Instead, if the mobile terminal is presently located in the cell border area it may be associated to the second antenna signal interface (group) and, hence, the second antenna directivity pattern.

According to a further aspect of the present invention it is also provided a method for a base station serving a cell of a wireless communication system. The base station may be coupled to an antenna system which is operable to provide a first antenna directivity pattern for a first region of the cell and a second antenna directivity pattern for a second region of the cell. The first and the second antenna directivity pattern are both associated to or serving said cell. The method comprises a step of transmitting/receiving a first signal to/from a mobile terminal associated to the cell via the first antenna directivity pattern and to transmit/receive a second signal to/from the mobile terminal via the second antenna directivity pattern, and a step of classifying the mobile terminal as to whether the mobile terminal may be associated to the first region of the cell or whether the mobile terminal may be associated to the second region of the cell based on a wireless channel evaluation using the first and the second signal.

Some embodiments comprise a digital control circuit installed within the apparatus for performing the method. Such a digital control circuit, e.g. a Digital Signal Processor (DSP) or a Field Programmable Gate Array (FPGA), needs to be programmed accordingly. Hence, yet further embodiments also provide a computer program having a program code for performing embodiments of the method, when the computer program is executed on a computer or a digital processor.

Embodiments may improve the performance of a wireless communication system, mainly cell capacity, of advanced antenna systems, especially AAA.

### Brief description of the Figures

Some embodiments of apparatuses and/or methods will be described in the following by way of example only, and with reference to the accompanying figures, in which
- Fig. 1a: schematically illustrates an apparatus for a base station serving a cell of a wireless communication system, according to an embodiment;
- Fig. 1b: schematically illustrates an antenna system providing a first antenna directivity pattern and a second antenna directivity pattern, according to an embodiment;
- Fig. 2: schematically illustrates a block diagram of a mobile terminal, according to an embodiment;
- Fig. 3a: illustrates an embodiment employing four common antenna ports associated to a first and a second antenna directivity pattern; and
- Fig. 3b: illustrates a transmission of a common reference signal via the first antenna directivity pattern during first time intervals and via the second antenna directivity pattern during second, different time intervals.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

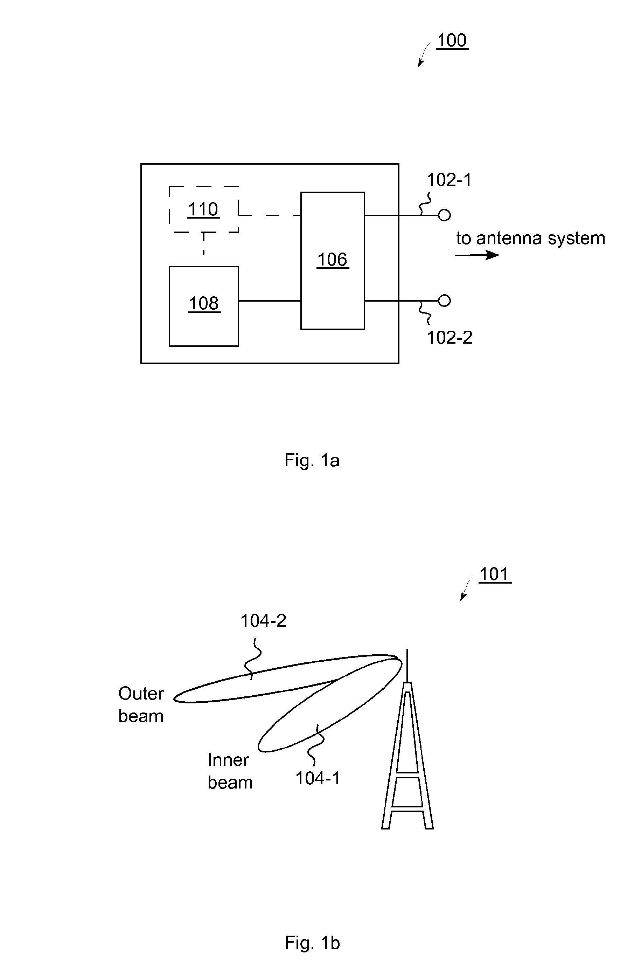

Fig. 1a schematically illustrates an apparatus 100 according to an embodiment of the present invention. The apparatus 100, which may also be referred to as base station apparatus may be deployed in or coupled to a base station which is serving a radio cell of a wireless communication system, such as the OFDMA-based LTE or LTE-Advanced system, for example.

The apparatus 100 and/or the base station may be coupled to an antenna system 101 (see Fig. 1b) via at least one first antenna signal interface 102-1 and at least one second antenna signal interface 102-2. The first antenna signal interface 102-1 and the second antenna signal interface 102-2 are associated to different signals passing the first antenna signal interface 102-1 and the second antenna signal interface 102-2, respectively. LTE-Advanced, for example, provides different antenna ports 0 to 22 at a base station (or eNodeB), which may be mapped to certain antenna signal interfaces or combinations thereof. Hence, there is no 1:1 relationship between the antenna ports and the antenna signal interfaces. For example, different baseband signals may be associated to different antenna signal interfaces. In some embodiments different reference or pilot signals may be associated to the first and the second antenna signal interface 102-1, 102-2, depending on how antenna signal interfaces and antenna ports are mapped to each other. The antenna system 101 coupled to the antenna signal interfaces 102-1 and 102-2 comprises a first logical antenna which may be associated to the first antenna signal interface 102-1 and a second logical antenna which may be associated to the second antenna signal interface 102-2. As can be seen from Fig. 1b, the antenna system 101 is operable to provide a first antenna directivity pattern 104-1 associated to the first logical antenna and a second antenna directivity pattern 104-2 associated to the second logical antenna. The first antenna directivity pattern 104-1 and the second antenna directivity pattern 104-2 are both associated to or serving the aforementioned radio cell of the wireless communication system but serve different (complementary) geographic regions of the cell.

According to embodiments the apparatus 100 comprises a transceiver circuit 106 which is operable or configured to transmit or receive, depending on whether downlink or uplink is considered, a first signal to or from a mobile terminal associated to the cell via the first antenna directivity pattern 104-1 (or the first logical antenna) and operable to transmit or receive a second signal to or from said mobile terminal via the second antenna directivity pattern 104-2 (or the second logical antenna).

The apparatus 100 further comprises a classifier circuit 108 which is operable to classify the mobile terminal, based on a wireless channel evaluation using the first and the second signal, as to whether the mobile terminal may be associated to the first region of the cell or whether the mobile terminal may be associated to the second region of the cell. The classifier 108 may hence perform a classification of the mobile terminal as to whether the mobile terminal shall be served by the first or the second antenna directivity pattern 104-1, 104-2. As the two different directivity patterns 104-1 and 104-2 may be associated with the two antenna signal interfaces 102-1, 102-2, respectively, the classification may indicate whether the mobile terminal shall be served via the first antenna signal interface 102-1 associated to the first directivity pattern 104-1 or via the second antenna signal interface 102-2 associated to the second directivity pattern 104-1. Also, as the two different directivity patterns 104-1 and 104-2 serve different spatial areas or regions of the radio cell, the classification may also be regarded as a spatial classification of mobile terminals associated or attached to the radio cell of the wireless communication system.

In embodiments the first and the second antenna directivity patterns 104-1, 104-2 may both be statically configured and cell region specific. The first antenna directivity pattern 104-1 may have a different downtilt than the second antenna directivity pattern 104-2, such that the first antenna directivity pattern 104-1, and thus the first antenna signal interface 102-1 associated to the first antenna directivity pattern 104-1, serves a center region of the radio cell, while the second antenna directivity pattern 104-1, and thus the second antenna signal interface 102-2 associated to the second antenna directivity pattern 104-2, serves a border or edge region of the radio cell. The at least two spatial regions, i.e., for example, the center and the border region of the cell, are both associated to the same cell ID. That means that a UE associated to the base station or cell of the wireless communication system does not need to perform a handover when travelling from the cell's center region to the cell's border region, or vice-versa. In other words, also the at least one first antenna signal interface 102-1 and the at least one second antenna signal interface 102-2 serve the same cell having said cell ID.

As can be seen from Fig. 1b, the antenna system 101 may provide the first and the second antenna directivity patterns or beams 104-1 and 104-2 with different downtilts, respectively. This may be realized either by using different beam-specific physical antennas or antenna elements related to the two beam patterns 104-1, 104-2, respectively, or by using a single antenna array, wherein individual antenna elements of the antenna array may be weighted with different beam-specific weighting coefficients. In the latter case, the one antenna array forms two logical antennas and may be coupled to both (groups of) antenna signal interface 102-1, 102-2. However, baseband or RF signals travelling through the first antenna signal interface (group) 102-1 may be weighted according to the first antenna directivity pattern (e.g. inner or cell center beam) 104-1, while signals travelling through the second antenna signal interface (group) 102-2 may be weighted with beamforming coefficients according to the second antenna directivity pattern 104-2 (e.g. outer or cell edge beam). That is to say, according to some embodiments the antenna system 101 may comprise an antenna array comprising a plurality of antenna elements, wherein the antenna array may be coupled to the base station via the first antenna signal interface (group) 102-1 and via the second antenna signal interface (group) 102-2. The first and the second antenna directivity pattern 104-1, 104-2 may be realized by applying first and second beamforming weight vectors to signals passing through the first and the second antenna signal interfaces 102-1, 102-2, respectively.

For obtaining different downtilts of the first and the second antenna directivity patterns 104-1, 104-2, the antenna elements of the antenna array may be vertically arranged. The first beamforming weight vector associated to the first directivity pattern 104-1 actuates the first antenna directivity pattern 104-1. The second beamforming weight vector associated to second directivity pattern 104-2 actuates said second antenna directivity pattern. Note that embodiments are not limited to antenna directivity patterns having respective main lobes with different downtilts, as it is exemplarily illustrated in Fig. 1b. Embodiments of the present invention may also relate to antenna directivity patterns with main lobes pointing in different horizontal directions, thus covering other embodiments where a radio cell may be subdivided into different horizontal areas all having the same cell ID.

In principle, embodiments of the apparatus 100 may be employed in downlink as well as in uplink scenarios. For the uplink, the transceiver 106 may be operable or configured to receive a first received signal from the mobile terminal via the first antenna directivity pattern 104-1, e.g. via the first antenna signal interface 102-1, and to receive a second received signal from the mobile terminal via the second antenna directivity pattern 104-2, e.g. via the second antenna signal interface 102-2. Correspondingly, the classifier 108 may be operable to classify the mobile terminal based on a first wireless channel evaluation using the first received signal and a second wireless channel evaluation using the second received signal. For example, if the first wireless channel evaluation related to a wireless channel between the base station and the UE affected by the first directivity pattern 104-1 indicates a better channel than the second wireless channel evaluation related to a wireless channel between the base station and the UE affected by the second directivity pattern 104-2, the classifying circuitry 108 may classify the mobile terminal as a cell center UE to be served via the first directivity pattern 104-1, for example. Thereby the first and the second received signals may be uplink reference signals (e.g. UL Sounding Reference Signals (SRS) in LTE) or pilot signals for channel estimation, according to some embodiments.

For the downlink, the transceiver 106 may in some embodiments be operable or configured to transmit a first antenna port specific (downlink) reference signal to the mobile terminal via the first antenna directivity pattern 104-1, e.g. via the first antenna signal interface 102-1, and to transmit a second antenna port specific (downlink) reference signal (or the same first reference signal, but in time-multiplex) to the mobile terminal via the second antenna directivity pattern 104-2, e.g. via the second antenna signal interface 102-2. In such embodiments the classifier 108 may be operable to classify the mobile terminal based on a first feedback provided by the mobile terminal in response to the first transmitted (downlink) reference signal and a second feedback provided by the mobile terminal in response to the second transmitted (downlink) reference signal.

3GPP LTE Release 10 allows a base station to define antenna port specific CSI reference signals (ports 15 to 22) and to command a UE by higher layer signaling via Radio Resource Control (RRC) to perform CSI measurements only on a certain subset of antenna port specific CSI reference signals. LTE Release 10 supports the transmission of CSI reference signals for one, two, four and eight antenna ports. Only a subset of such antenna port specific CSI reference signals may be used by the UE during a given Transmission Time Interval (TTI) for CSI measurements and respective CQI reports to the base station. By frequent RRC signaling the antenna port specific CSI reference signal subset to be used by the UE may be reconfigured frequently. That is to say, in some embodiments the first and the second downlink reference signals may be different antenna port specific reference signals based on different port specific reference signal derivation rules, respectively. The first reference signal may be based on a first antenna port specific derivation rule, while the second reference signal may be based on a different second antenna port specific derivation rule. The transmitter 106 may be operable to simultaneously transmit the first reference signal via the first antenna signal interface 102-1 associated to the first antenna directivity pattern 104-1 and to transmit the second reference signal via the second antenna signal interface 102-2 associated to the second antenna directivity pattern 104-2. The transmitter 106 may hence be operable or configured to simultaneously transmit the first and the second, different (CSI) reference signal via the first and the second antenna directivity pattern 104-1, 104-2, respectively. In other words, the transmitter 106 may be configured to simultaneously transmit the first and the second, different reference signal via the first and the second antenna signal interfaces 102-1, 102-2, respectively. That is to say, different region- or antenna port specific reference signals may be transmitted simultaneously using the at least one first antenna signal interface 102-1 serving the first directivity pattern 104-1 for the first region of the cell and the at least one second antenna signal interface 102-2 serving the second directivity pattern 104-2 for the second region of the same cell. Different reference signals may thus be transmitted at the same time by means of the first and the second beam 104-1, 104-2, respectively.

In such an embodiment the apparatus 100 may additionally comprise a configurator circuit 110 which is operable to signal configuration information to the mobile terminal, for example, via corresponding RRC signaling messages. The configuration information may indicate a first and a different second time interval. Further, the configuration information may indicate that the first time interval shall be used by the mobile terminal to perform a channel state evaluation based on the first reference signal (subset) and that the second time interval shall be used by the mobile terminal to perform a channel state evaluation based on the different second reference signal (subset). In this way, the apparatus 100 or the base station is able to acquire knowledge about a signal strength received by the UE from the first (inner) and second (outer) beam 104-1, 104-2 separately. The base station just needs to define and signal a first CSI reference signal (subset) corresponding to the first antenna signal interface 102-1 transmitting CSI reference signals on the first (inner) beam 104-1. Afterwards, on the basis of a few TTIs, for example, the base station may reconfigure the reference signal (subset) to be used by the UE to relate to the second antenna signal interface 102-2 associated to the second (outer) beam 104-2. Then the whole RRC reference signal signaling procedure may start over again. Now, for every CSI report that the base station receives from the UE at a given point in time, the base station knows to which directivity pattern or antenna port the CSI report belongs, as it has knowledge on what has previously been configured via RRC. Based on this knowledge, the classification task which has to be performed by the classifier 108 is possible.

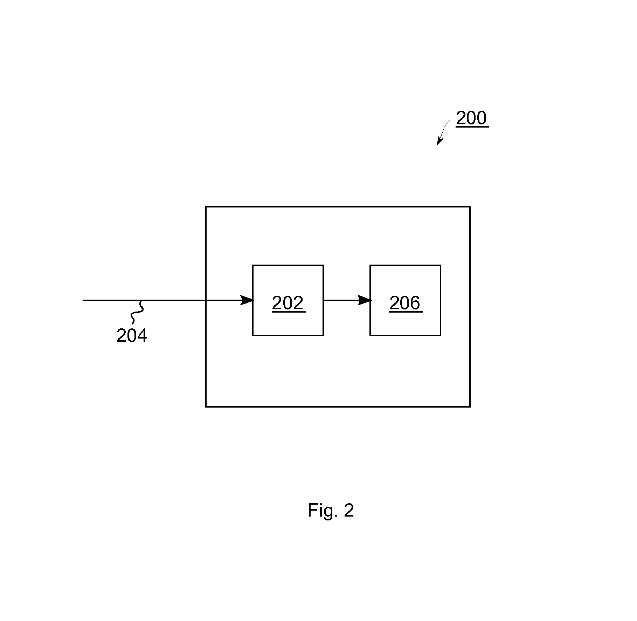

In embodiments working according to the aforementioned principle a mobile terminal needs to frequently reconfigure the antenna port specific CSI reference signal (subset) it is using, as commanded by the RRC message received by the network. Thus, some embodiments also provide a mobile terminal 200, as schematically sketched in Fig. 2.

The mobile terminal 200 comprises a receiver 202 which is operable to receive configuration information 204 indicating a first and a different second time interval, the configuration information 204 further indicating that the first time interval shall be used by the mobile terminal 200 to perform a channel state evaluation using a first (antenna port specific) reference or pilot signal and that the second time interval shall be used by the mobile terminal 200 to perform a channel state evaluation using a second, different (antenna port specific) reference signal. Further, the mobile terminal 200 comprises a channel state evaluator 206 which is operable or configured to perform the channel state evaluation using the first reference signal during the first time interval and to perform the channel state evaluation using the second, different reference signal during the second time interval. Thereby, the channel state evaluation using the first reference signal during the first time interval may be related to a wireless communication channel between the base station and the mobile terminal 200 affected by the first antenna directivity pattern 104-1. Likewise, the channel state evaluation using the second reference signal during the second time interval may be related to a second wireless communication channel between the base station and the mobile terminal 200 affected by the second antenna directivity pattern 104-2.

According to another aspect of the present invention the first and the second (downlink) reference signal associated to the first and the second directivity pattern 104-1, 104-2, respectively, may be based on a common reference signal derivation rule for only one antenna port. That is to say, the first and the second reference signals may be associated to only one antenna port in some embodiments. In such embodiments, the transmitter 106 may be operable to transmit the first reference signal via the first antenna directivity pattern 104-1, i.e. via the first antenna signal interface 102-1, during a first time interval and to transmit the second reference signal via the second antenna directivity pattern 104-2, i.e. via the second antenna signal interface 102-2, during a second time interval, which is different from the first time interval. In particular, the first and the second time intervals may be subsequent non-overlapping time intervals. Contrary to the previously described embodiment, the same reference signal may in this case be configured for both of the two beams 104-1 and 104-2. In other words, one reference signal that is associated to only one antenna port may be transmitted via both directivity patterns 104-1, 104-2 during different, possibly alternating time intervals.

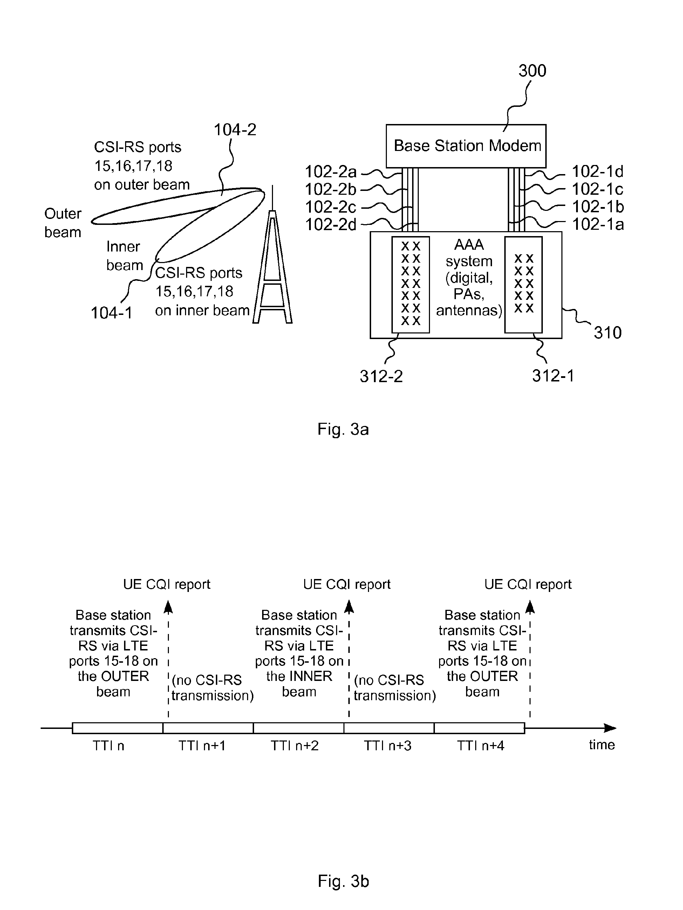

For example, the CSI reference signal(s) of a radio cell may only be configured for half of the actually used antenna signal interfaces, which will be described in further detail below referring to Figs. 3a, b. Now, different to what the 3GPP standard originally had in mind, the number of logical antennas that are actually used for transmitting the CSI reference signals is not equal to the number of configured LTE downlink antenna ports but is arbitrarily higher. For example, it may be eight instead of four. In some embodiments the same CSI reference signals may be transmitted by the base station alternately from different (logical) antennas related to the different beams 104-1, 104-2. For example, at odd subframe numbers, a CSI reference signal specific to the first antenna port 15 may be transmitted using the first (inner) beam 104-1 via antenna signal interface 102-1a, whereas in even sub frames the same CSI reference signal specific to the first antenna port 15 is transmitted using the second (outer) beam 104-2 via antenna signal interface 102-2a. Note that this scheme can be readily generalized for more than just two beam patterns and or antenna ports, and also the way the (logical) antennas are defined may be arbitrary according to a particular antenna system setup.

According to the latter principle a mobile terminal does not need to be aware of an alternation between logical antennas and/or directivity patterns transmitting the (same antenna port specific) downlink reference signals. The mobile terminal instead will do the same thing every subframe or TTI (= transmission time interval = subframe) in which a CSI reference signal is present: It will measure the channel state based on the transmitted CSI reference signal specific to the antenna ports 15-18 (e.g. alternatingly transmitted via antenna signals interface 102-1a-d and 102-2a-d), for example, and report the evaluated CSI by means of CQI, PMI, etc., as described by LTE Release 10. Thereby the mobile terminal determines the CSI to be reported by means of CQI, PMI, etc., only based on the CSI reference signal measurement of one single TTI. LTE Release 10 does not allow the mobile terminal to average over several (subsequent) subframes. More precisely, the CQI measurement (which can be considered a kind of Signal-to-Noise measurement) done by the UE comprises two parts, the "signal power" part and the "noise power" part. While the noise power part may be averaged by the UE over several subframes, the signal power part may not be averaged. Moreover, it is important to note that the mobile terminal uses the downlink CSI reference signals only for determining the CSI feedback information and not for any other purpose like, for example, data demodulation. Therefore, it is possible that the CSI reference signal common for both beams 104-1 and 104-2 is transmitted by the base station from (logical or physical) antennas that are completely different and independent from those used for control and user plane data.

Now that the apparatus 100 or the associated base station may apply the described scheme for common CSI reference signal transmission over alternating (logical) antennas, it is able to perform the classification task, i.e., whether the UE is located in the first (inner) or second (outer) beam 104-1, 104-2, in a more reliable way and with less software complexity than in the previously described embodiment. Also, no dedicated RRC signaling is required as the UE may always use the same reference signal for CSI evaluation. As the apparatus 100 or its classifier 108 knows which CSI feedback is related to which beam 104-1, 104-2, the classification task can be handled based on the knowledge of the timing dependencies. If the CSI feedback related to the first beam 104-1 indicates a better channel than the CSI feedback related to the second beam 104-2, the mobile terminal apparently is in the first (e.g. inner) cell region and, hence, will be served by the first (inner) beam 104-1, thus by the first antenna signal interface 102-1. If the CSI feedback related to the first beam 104-1 indicates a worse channel than the CSI feedback related to the second beam 104-2, the mobile terminal apparently is in the second (e.g. outer) cell region and, hence, will be served by the second (outer) beam 104-2, thus by the second antenna signal interface 102-2. Hence, after the classification, the base station may transmit control and user plane information dedicated to this mobile terminal by LTE Rel-10 transmission mode 7, 8 or 9, i.e., using UE-specific reference signals (DMRS) utilizing the logical antennas associated with either the first or the second beam 104-1, 104-2. In other words, the transceiver 106 may be operable, after the classification of the mobile terminal 200, to communicate with the mobile terminal 200 using either the first antenna directivity pattern 104-1 or the second antenna directivity pattern 104-2, depending on whether the mobile terminal 200 has been associated to the first region of the cell or whether the mobile terminal 200 has been associated to the second region of the cell. For example, if a rank 4 downlink data transmission with TM9 is going to take place for a UE 1 that was classified to be located in the first beam (based on CQI measured on CSI-RS from LTE antenna ports 15 to 18), then the modem will utilize the antenna signal interface 102-1a-d for transmitting the corresponding signals of port 7, 8, 9 and 10 for this UE 1. At the same time, another UE 2 that was classified to be in the second beam and that may have e.g. rank 2 transmission will receive its TM9 signal on ports 7 and 8 via antenna signal interface 102-2a-d.

If the first and the second antenna directivity patterns 104-1, 104-2 have overlapping regions (e.g. their respective main lobes may overlap, or in some other direction (side lobe regions) a combination of the two individual patterns may yield a higher gain than any of the single patterns individually), embodiments employing the transmission of the first and the second reference signals based on the common and antenna port specific derivation rule in different subframes (=TTIs) may also be used in a different fashion by defining that in certain subframes the first and the second antenna directivity patterns 104-1, 104-2 are used for CSI reference signal transmission via one antenna port simultaneously, thus effectively creating a third directivity pattern. That is, according to some embodiments the first and the second antenna directivity pattern 104-1, 104-2, or their respective logical antenna, may be configured such that a first main lobe of the first antenna directivity pattern 104-1 and a second main lobe of the second antenna directivity pattern 104-2 have overlapping main lobe or side lobe regions. The first and the second reference signals may be based on a common derivation rule, i.e. they may both correspond to the same antenna port. In some embodiments the first and the second reference signal may both be possibly identical reference signals both dedicated to the same antenna port. The transceiver 106 may be operable to transmit the antenna port specific reference signal simultaneously via the first and the second antenna directivity pattern 104-1, 104-2, and via both the first and second antenna signal interfaces 102-1, 102-2, during configurable transmission time intervals. More precisely, if s(t) is the original reference signal, then the reference signal c1*s(t is transmitted on 102-1, and c2*s(t) is transmitted on 102-2, where c1 and c2 are complex numbers (weights). By this, a third logical antenna beam pattern is effectively created by the modem, where the shape of this third beam pattern is the result of a weighted overlay of the two individual beam patterns 104-1 and 104-2, and is determined by c1 and c2. Note that this third beam pattern has no dedicated third antenna signal interface 102 associated with it, because it is created by a combination (superposition) of the already available antenna signal interfaces 102-1 and 102-2. In this way, the associated CSI report may also contain phase information between wireless channels associated to this third directivity pattern, which is formed by the given superposition of first and second directivity pattern 104-1, 104-2, such that a subsequent TM9 data transmission to the respective mobile terminal can be further optimized in that the subsequent TM9 data transmission may typically also occur utilizing a combination of 102-1 and 102-2 and may typically use the same weights c1 and c2.

A particular embodiment of the present invention will now be described with reference to Figs. 3a and 3b.

Fig. 3a shows a base station modem apparatus 300 coupled to an adaptive antenna array (AAA) system 310 by means of eight antenna signal interfaces 102-1a, 102-1b, 102-1c, 102-1d and 102-2a, 102-2b, 102-2c, and 102-2d. The first antenna signal interfaces 102-1a, 102-1b, 102-1c, 102-1d are coupling the base station modem apparatus 300 to a logical first antenna 312-1, whereas the second antenna signal interfaces 102-2a, 102-2b, 102-2c, and 102-2d are coupling the base station modem apparatus 300 to a second logical antenna 312-2 of the antenna system 310. While the first logical antenna 312-1 serves for generating the first, inner directivity pattern or beam 104-1, the second logical antenna 312-2 serves for generating the second, outer directivity pattern or beam 104-2. Both logical antennas 312-1 and 312-2 comprise two columns of cross-polarized (X-pol) radiating antenna elements, respectively. Both logical antennas 312-1 and 312-2 may e.g. be realized by a common physical antenna array having two columns of cross-polarized (X-pol) radiating antenna elements, i.e. four "functional" antenna columns (two +45°-polarized and two -45°-polarized, respectively). Each of the first antenna signal interfaces 102-1a, 102-1b, 102-1c, 102-1d and the second antenna signal interfaces 102-2a, 102-2b, 102-2c, 102-2d is dedicated to one of the four functional antenna columns of the two logical antennas 312-1 and 312-2, respectively. The AAA 310 is able to shape two vertical beams 104-1 and 104-2 for each of these four columns by means of digital signal processing in the baseband. The two beams 104-1 and 104-2 differ in terms of downtilt and beam shape, e.g. beam width.

This means, functionally or logically, there are eight transmit antennas that the AAA 310 can support, namely four for the inner beam 104-1 and four for the outer beam 104-2. The AAA 310 is connected to the base station modem apparatus 300 via digital CPRI links or fibers. There are eight logical CPRI links, one per each logical antenna, such that the modem algorithms are aware of eight logical antennas. Fig. 3a illustrates the situation as it is seen from the modem perspective. The modem 300 "sees" eight logical antennas or antenna signal interfaces 102-1a, 102-1b, 102-1c, 102-1d and 102-2a, 102-2b, 102-2c, 102-2d, half of them mapping to inner and outer beam respectively. The modem apparatus 300 does not need to know whether the beams 104-1, 104-2 are realized by AAA beamforming means or by two independent passive antennas, as both schemes are transparent to the modem apparatus 300.

According to an embodiment the LTE cell's CSI reference signals may be set up for only four antenna ports, although there are eight logical antennas actually existing. Common channels like Synchronization Channel (SCH), Broadcast Channel (BCH) or Physical Downlink Control Channel (PDCCH) may always be sent on the outer beam 104-2 for the sake of maximum cell coverage in this embodiment. Also, CSI reference signals are only defined for four antenna ports, e.g., for antenna port numbers 15 to 18. That is to say, according to an embodiment, the CSI reference signals for LTE antenna port numbers 15 to 18, which may be dedicated to the first directivity pattern 104-1, may also be transmitted via the second directivity pattern 104-2, i.e. the second logical antenna 312-2. Also, user plane transmission in TM9 can support no more than four antenna ports (LTE ports 7 to 10). However, the question which (up to four) of these eight logical antennas are actually used by the modem apparatus 300 to transmit a TM9 downlink signal to a particular UE may be decided case by case by the modem apparatus 300. It is fully flexible and may be different from UE to UE and from TTI to TTI. The up to four TX antennas (from the modem point of view) used for TM9 transmission will either all belong to the outer or all belong to the inner beam for one UE and one TTI, depending on the latest classification result of the modem apparatus 300 for the particular UE as to where the UE is located in terms of vertical direction (i.e. cell center or cell edge). For this classification task, the modem apparatus 300 may evaluate the CQI reports received from the UE. Because of the known beam-specific timing, the modem apparatus 300 knows which received CQI reports are based on UE measurements on the outer or inner beam's CSI reference signals. For this reason the modem apparatus 300 may do the classification task correctly. When the CQI reports of a UE indicate a significantly higher quality for those TTIs where CSI reference signals were sent via the outer beam 104-2 (as compared to the inner beam TTIs), then the modem apparatus 300 may classify the UE to be located in the outer beam 104-2, and vice-versa. Other CSI feedback like PMI or RI may alternatively or additionally be used for the classification of the mobile terminal.

Note that in general CSI reference signals do not need to be transmitted in every TTI. This may be configured according to the LTE standard. According to the example illustrated in Fig. 3b, only every second TTI is actually used for CSI reference signal transmission. In the example of Fig. 3b the base station transmits CSI reference signals via LTE ports 15 to 18 on the outer beam 104-2 in TTI *n.* In response to the transmitted CSI reference signals the base station may receive the UE's CQI report shortly after TTI *n.* No CSI reference signal transmission takes place in subsequent TTI *n*+1. Then, in TTI n+2, the base station transmits the CSI reference signals via the same LTE ports 15 to 18 on the inner beam 104-1 and receives the corresponding UE CQI report. Again, there is no CSI reference signal transmission in TTI n+3. Again, in TTI n+4 the base station transmits the CSI reference signal via LTE ports 15 to 18 on the outer beam 104-2 and obtains the related UE's CQI report afterwards, and so on.

In a particular embodiment, the classification result may also be used for uplink processing. To save processing power the apparatus 300 may process only four of the eight receive (RX) streams for each particular user depending on their classification results for the downlink. That is to say, that apparatus 300 or its transceiver 106 may be adapted to only process signals of antenna ports which are associated to the antenna directivity pattern, which has been chosen as the serving antenna directivity pattern for the UE, i.e., which has been associated to the mobile terminal. Another possibility is that the apparatus 300 may use all eight uplink signals for performing a classification on the uplink, e.g. using the UL sounding reference signal (SRS) transmitted periodically by the UE, independent of the downlink classification because of the duplex distance or different beam shapes in downlink and uplink, and then processes the actual RX data on only four streams to save processing power. Also, a combined uplink/downlink classification is possible. If the UE has not sent any CSI feedback for a longer time, the uplink classification could be used in place of the CQI-feedback-based classification. That is to say, the transceiver 106 may be operable to receive a first received signal from a mobile terminal via at least one first antenna signal interface associated to the first antenna directivity pattern 104-1 and to receive a second received signal from the mobile terminal via at least one second antenna signal interface associated to the second antenna directivity pattern 104-2. The classifier may in this case be operable to classify the mobile terminal based on a first wireless channel evaluation using the first received signal and a second wireless channel evaluation using the second received signal.

To summarize, some embodiments propose to perform CSI-RS transmission via *M* alternating logical antennas via 1/*N*-th of the total number of used antenna signal interfaces (where *M=N* in the standard case or even *M>N* when modem combines available antenna signal interfaces to create yet further logical antennas) without associated RRC signaling, and with DL user data transmission with DM-RS (e.g. LTE Rel-10 TM9) in Single-User Multiple-Input Multiple-Output (SU-MIMO) or Multi-User Multiple-Input Multiple-Output (MU-MIMO) mode that exploits the knowledge accumulated over time from multiple subsequent CSI feedbacks of one or several UEs. Embodiments allow a base station to acquire more information about the radio channel than what would be possible according to the number of LTE DL antenna ports configured for CSI-RS in this cell according to cell info. This additional information (be it signal strength information, as demonstrated with the "outer/inner beam example", or be it phase information, as mentioned above) can be exploited to optimize the subsequent user data transmission with TM9.

The description and drawings merely illustrate the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. An apparatus (100; 300) for a base station serving a cell of a wireless communication system, wherein the base station may be coupled to an antenna system (101; 310) operable to provide a first antenna directivity pattern (104-1) for a first region of the cell and a second antenna directivity (104-2) pattern for a second region of the cell, wherein the first region and the second region of the cell both have the same cell identifier information dispensing with handovers between the first and second region of the cell, the apparatus (100; 300) comprising:
a transceiver (106) operable to transmit or receive a first signal to or from a mobile terminal (200) associated to the cell via the first antenna directivity pattern (104-1) and operable to transmit or receive a second signal to or from said mobile terminal (200) via the second antenna directivity pattern (104-2); and
a classifier (108) operable to classify the mobile terminal (200), based on a wireless channel evaluation using the first and the second signal, as to whether the mobile terminal (200) may be associated to the first region of the cell or whether the mobile terminal (200) may be associated to the second region of the cell.

2. The apparatus (100; 300) according to claim 1, wherein the transceiver (106) is operable to transmit a first reference signal associated with a first antenna port to the mobile terminal (200) using the first antenna directivity pattern (104-1) and to transmit a second reference signal associated with the first or a second antenna port to the mobile terminal (200) using the second antenna directivity pattern (104-2), and wherein the classifier (108) is operable to classify the mobile terminal (200) based on a first feedback provided by the mobile terminal (200) in response to the first transmitted reference signal and a second feedback provided by the mobile terminal (200) in response to the second transmitted reference signal.

3. The apparatus (100; 300) according to claim 1, wherein the transceiver (106) is operable to receive a first received signal from the mobile terminal (200) via the first antenna directivity pattern (104-1) and to receive a second received signal from the mobile terminal (200) via the second antenna directivity pattern (104-2), and wherein the classifier (108) is operable to classify the mobile terminal (200) based on a first wireless channel evaluation using the first received signal and a second wireless channel evaluation using the second received signal.

4. The apparatus (100; 300) according to claim 2, wherein the first and the second reference signals are associated to the same antenna port, and wherein the transceiver (106) is operable to transmit the first reference signal using the first antenna directivity pattern (104-1) during a first time interval and to transmit the second reference signal using the second antenna directivity pattern (104-2) during a second time interval, wherein the first and second time intervals are different from each other.

5. The apparatus (100; 300) according to claim 2, wherein the first and the second antenna directivity pattern (104-1; 104-2) are configured such that a first main or side lobe of the first antenna directivity pattern (104-1) and a second main or side lobe of the second antenna directivity pattern (104-2) have overlapping regions, wherein the first and the second reference signals are associated to the same antenna port, and wherein the transceiver (106) is operable to transmit the first and the second reference signal simultaneously via the first and the second antenna directivity pattern (104-1; 104-2) during configurable transmission time intervals.

6. The apparatus (100; 300) according to claim 2, wherein the first reference signal is associated to a first antenna port, wherein the second reference signal is associated to a second antenna port le, and wherein the transmitter is operable to simultaneously transmit the first reference signal via a first antenna signal interface (102-1) associated to the first antenna directivity pattern (104-1) and the second reference signal via a different second antenna signal interface (102-2) associated to the second antenna directivity pattern (104-2).

7. The apparatus (100; 300) according to claim 6, further comprising:
a configurator (110) operable to signal configuration information (204) to the at least one mobile terminal (200), the configuration information indicating a first and a second, different, time interval, and indicating that the first time interval shall be used by the mobile terminal (200) to perform a channel state evaluation using the first reference signal and that the second time interval shall be used by the mobile terminal (200) to perform a channel state evaluation using the second reference signal.

8. The apparatus (100; 300) according to claim 1, wherein the first antenna directivity pattern (104-1) has a different downtilt than the second antenna directivity pattern (104-2), such that the first antenna directivity pattern (104-1) serves a center region of the cell and the second antenna directivity pattern (104-2) serves a border region of the cell, or vice versa.

9. The apparatus (100; 300) according to claim 2, wherein the first and the second reference signals are cell-specific downlink reference signals allowing the mobile terminal (200) to estimate channel state information relating to a first wireless channel affected by the first antenna directivity pattern (104-1) between the base station and said mobile terminal (200) and to estimate channel state information relating to a second wireless channel affected by the second antenna directivity pattern (104-2) between the base station and said mobile terminal (200).

10. The apparatus (100; 300) according to claim 1, wherein the antenna system (101; 310) comprises an antenna array comprising a plurality of antenna elements, and wherein the antenna array is coupled to the base station via at least one first antenna signal interface (102-1) and via at least one second antenna signal interface (102-2), wherein the first and second antenna directivity patterns (104-1; 104-2) are realized by applying first and second beamforming weight vectors to signals passing through the at least one first and/or at least one second antenna signal interface (102-1; 102-2), respectively.

11. The apparatus (100; 300) according to claim 1, wherein transceiver (106) is operable, after the classification of the mobile terminal (200), to communicate with the mobile terminal (200) using either the first antenna directivity pattern (104-1) or the second antenna directivity pattern (104-2), depending as to whether the mobile terminal (200) has been associated to the first region of the cell or whether the mobile terminal (200) has been associated to the second region of the cell.

12. The apparatus (100; 300) according to claim 2, wherein the first and the second reference signals are channel state information reference signals, CSI-RS, respectively.

13. The apparatus (100; 300) according to claim 1, wherein the wireless communication system is a Long-Term Evolution, LTE, communication system.

14. A method for a base station serving a cell of a wireless communication system to associate a mobile terminal to a region of a cell, wherein the base station may be coupled to an antenna system (101; 310) operable to provide a first antenna directivity pattern (104-1) for a first region of the cell and a second antenna directivity (104-2) pattern for a second region of the cell, wherein the first region and the second region of the cell both have the same cell identifier information dispensing with handovers between the first and second region of the cell, the method comprising:
transmitting or receiving a first signal to or from the mobile terminal (200) associated to the cell via the first antenna directivity pattern (104-1);
transmitting or receiving a second signal to or from said mobile terminal (200) via the second antenna directivity pattern (104-2); and
classifying the mobile terminal (200), based on a wireless channel evaluation using the first and the second signal, as to whether the mobile terminal (200) may be associated to the first region of the cell or whether the mobile terminal (200) may be associated to the second region of the cell.

15. A computer program having a program code for performing the method of claim 14, when the computer program is executed on a programmable hardware device.

## Patentansprüche

1. Vorrichtung (100; 300) für eine Basisstation, die ein drahtloses Kommunikationssystem bedient, wobei die Basisstation an ein Antennensystem (101; 310) gekoppelt sein kann, das ausgelegt ist für die Bereitstellung eines ersten Antennenrichtungsmusters (104-1) für einen ersten Bereich der Zelle und eines zweiten Antennenrichtungsmusters (104-2) für einen zweiten Bereich der Zelle, wobei der erste Bereich und der zweite Bereich der Zelle mit Handovers zwischen dem ersten und dem zweiten Bereich der Zelle jeweils dieselbe Zellenkennungsinformation ausgeben, wobei die Vorrichtung (100; 300) umfasst:
einen Sendeempfänger (106), ausgelegt für das Übertragen oder den Empfang eines ersten Signals an ein mobiles oder von einem mobilen Endgerät (200), das der Zelle über das erste Antennenrichtungsmuster (104-1) zugeordnet ist, sowie ausgelegt für das Übertragen oder Empfangen eines zweiten Signals an besagtes mobiles oder von besagtem mobilem Endgerät (200) über das zweite Antennenrichtungsmuster (104-2); und
einen Klassifizierer (108), ausgelegt für das Klassifizieren des mobilen Endgeräts (200) auf der Grundlage einer Evaluierung des drahtlosen Kanals anhand des ersten und des zweiten Signals, um zu prüfen, ob das mobile Endgerät (200) dem ersten Bereich der Zelle oder ob das mobile Endgerät (200) dem zweiten Bereich der Zelle zugeordnet werden kann.

2. Vorrichtung (100; 300) nach Anspruch 1, wobei der Sendeempfänger (106) ausgelegt ist für das Übertragen eines ersten, dem ersten Antennenausgang zugeordneten Referenzsignals an das mobile Endgerät (200) unter Verwendung des ersten Antennenrichtungsmusters (104-1) sowie für das Übertragen eines zweiten, dem zweiten Antennenausgang zugeordneten Referenzsignals an das mobile Endgerät (200) unter Verwendung des zweiten Antennenrichtungsmusters (104-2), und wobei der Klassifizierer (108) ausgelegt ist für das Klassifizieren des mobiles Endgeräts (200) auf der Grundlage einer ersten von dem mobilen Endgerät (200) in Reaktion auf das erste übermittelte Referenzsignal zur Verfügung gestellten Rückmeldung sowie auf der Grundlage einer zweiten von dem Mobilen Endgerät (200) in Reaktion auf das zweite übermittelte Referenzsignal zur Verfügung gestellten Rückmeldung.

3. Vorrichtung (100; 300) nach Anspruch 1, wobei der Sendeempfänger (106) ausgelegt ist für den Empfang eines ersten empfangenen Signals von dem mobilen Endgerät (200) über das erste Antennenrichtungsmuster (104-1) sowie für den Empfang eines zweiten empfangenen Signals von dem mobilen Endgerät (200) über das zweite Antennenrichtungsmuster (104-2), und wobei der Klassifizierer (108) ausgelegt ist für das Klassifizieren des mobilen Endgeräts (200) auf der Grundlage einer ersten Evaluierung des drahtlosen Kanals anhand des ersten empfangenen Signals sowie einer zweiten Evaluierung des drahtlosen Kanals anhand des zweiten empfangenen Signals.

4. Vorrichtung (100; 300) nach Anspruch 2, wobei das erste und das zweite Referenzsignal demselben Antennensystem zugeordnet sind und wobei der Sendeempfänger (106) ausgelegt ist für das Übertragen des ersten Referenzsignals unter Verwendung des ersten Antennenrichtungsmusters (104-1) während eines ersten Zeitintervalls und zur Übertragung des zweiten Referenzsignals unter Verwendung des zweiten Antennenrichtungsmusters (104-2) während eines zweiten Zeitintervalls, wobei das erste und das zweite Zeitintervall einander nicht gleich sind.

5. Vorrichtung (100; 300) nach Anspruch 2, wobei das erste und das zweite Antennenrichtungsmuster (104-1; 104-2) so konfiguriert sind, dass eine erst Haupt- oder Nebenkeule des ersten Antennenrichtungsmusters (104-1) und eine zweite Haut- oder Nebenkeule des zweiten Antennenrichtungsmusters (104-2) einander überlappende Bereiche haben, wobei das erste und das zweite Referenzsignal demselben Antennenausgang zugeordnet sind und wobei der Sendeempfänger (106) ausgelegt ist für das simultane Übermitteln des ersten und des zweiten Referenzsignals über das erste und das zweite Antennenrichtungsmuster (104-1; 104-2) während konfigurierbarer Übertragungs-Zeitintervalle.

6. Vorrichtung (100; 300) nach Anspruch 2, wobei das erste Referenzsignal dem ersten Antennenausgang zugeordnet ist und das zweite Referenzsignal einem zweiten Antennenausgang zugeordnet ist, und wobei der Sender ausgelegt ist für das simultane Übertragen des ersten Referenzsignals über eine erste, dem ersten Antennenrichtungsmuster (104-1) zugeordneten Antennensignalschnittstelle (102-1) und des zweiten Referenzsignals über eine zweite, dem zweiten Antennenrichtungsmuster (104-2) zugeordnete Antennensignalschnittstelle (102-2).

7. Vorrichtung (100; 300) nach Anspruch 6, weiterhin umfassend:
Konfigurator (110), ausgelegt für das signalisieren von Konfigurationsinformationen (204) an mindestens ein mobiles Endgerät (200), wobei die Konfigurationsinformationen ein erstes und ein zweites Zeitintervall angeben, die einander nicht gleich sind, und wobei die Konfigurationsinformationen weiterhin angeben, dass das erste Zeitintervall von dem mobilen Endgerät (200) für das Ausführen einer Kanalzustands-Evaluierung unter Verwendung des ersten Referenzsignals verwendet werden soll, und das zweite Zeitintervall für das Ausführen einer Kanalzustands-Evaluierung unter Verwendung des zweiten Referenzsignals.

8. Vorrichtung (100; 300) nach Anspruch 1, wobei das erste Antennenrichtungsmuster (104-1) einen anderen Abwärtsneigungswinkel hat als das zweite Antennenrichtungsmuster (104-2), dergestalt, dass das erste Antennenrichtungsmuster (104-1) einen zentralen Bereich der Zelle bedient und das zweite Antennenrichtungsmuster (104-2) einen Randbereich der Zelle, oder vice versa.

9. Vorrichtung (100; 300) nach Anspruch 2, wobei das erste und das zweite Referenzsignal zellenspezifsische Downlink-Referenzsignale sind, die dem mobilen Endgerät (200) die Bewertung von Kanalzustandsinformationen in Bezug auf einen ersten drahtlosen Kanal zwischen der Basisstation und besagtem mobilem Endgerät (200) unter dem Einfluss des ersten Antennenrichtungsmusters (104-1) sowie die Bewertung der Kanalzustandsinformationen in Bezug auf einen zweiten drahtlosen Kanal zwischen der Basisstation und besagtem Mobilem Endgerät (200) unter dem Einfluss des zweiten Antennenrichtungsmusters (104-2) ermöglichen.

10. Vorrichtung (100; 300) nach Anspruch 1, wobei das Antennensystem (101; 310) eine Antennenanordnung umfasst, die eine Vielzahl von Antennenelementen umfasst, und wobei die Antennenanordnung über mindestens eine erste Antennensignalschnittstelle (102-1) und über mindestens eine zweite Antennensignalschnittstelle (102-2) an die Basisstation gekoppelt ist, wobei die ersten und die zweiten Antennenrichtungsmuster (104-1; 104-2) durch die Anwendung erster und zweiter strahlformender Gewichtungsvektoren auf Signale umgesetzt werden, die jeweils mindestens eine erste und/oder mindestens eine zweite Antennensignalschnittstelle (102-1; 102-2) passieren.

11. Vorrichtung (100; 300) nach Anspruch 1, wobei der Sendeempfänger (106) nach der Klassifizierung des mobilen Endgeräts (200) ausgelegt ist für die Kommunikation mit dem mobilen Endgerät (200) unter Verwendung entweder des ersten Antennenrichtungsmusters (104-1) oder des zweiten Antennenrichtungsmusters (104-2), je nachdem, ob das mobile Endgerät (200) dem ersten Bereich der Zelle oder ob das mobile Endgerät (200) dem zweiten Bereich der Zelle zugeordnet wurde.

12. Vorrichtung (100; 300) nach Anspruch 2, wobei das erste und das zweite Referenzsignal jeweils Kanalzustandsinformations-Referenzsignale (CSI-RS) sind.

13. Vorrichtung (100; 300) nach Anspruch 1, wobei das drahtlose Kommunikationssystem ein Kommunikationssystem nach dem Mobilfunkstandard Long-Term Evolution (LTE) ist.

14. Verfahren für die Zuordnung eines mobilen Endgeräts zu einem Bereich einer Zelle durch eine Basisstation, die ein drahtloses Kommunikationssystem bedient, wobei die Basisstation an ein Antennensystem (101; 310) gekoppelt sein kann, das ausgelegt ist für die Bereitstellung eines ersten Antennenrichtungsmusters (104-1) für einen ersten Bereich der Zelle und eines zweiten Antennenrichtungsmusters (104-2) für einen zweiten Bereich der Zelle, wobei der erste Bereich und der zweite Bereich der Zelle mit Handovers zwischen dem ersten und dem zweiten Bereich der Zelle jeweils dieselbe Zellenkennungsinformation ausgeben, wobei das Verfahren umfasst:
Übertragen oder Empfangen eines ersten Signals an ein oder von einem mobiles/n Endgerät (200), das der Zelle über das erste Antennenrichtungsmuster (104-1) zugeordnet ist;
Übertragen oder Empfangen eines zweiten Signals an oder von besagtes/m mobiles/m Endgerät (200) über das zweite Antennenrichtungsmuster (104-2); und Klassifizieren des mobilen Endgeräts (200) auf der Grundlage einer Evaluierung des drahtlosen Kanals anhand des ersten und des zweiten Signals, um zu prüfen, ob das mobile Endgerät (200) dem ersten Bereich der Zelle oder ob das mobile Endgerät (200) dem zweiten Bereich der Zelle zugeordnet werden kann.

15. Computerprogramm mit einem Programmcode zur Umsetzung des Verfahrens nach Anspruch 14, wenn das Computerprogramm auf einer programmierbaren Hardware ausgeführt wird.

## Revendications

1. Appareil (100 ; 300) pour une station de base desservant une cellule d'un système de communication sans fil, dans lequel la station de base peut être couplée à un système d'antenne (101 ; 310) pouvant fonctionner pour produire un premier diagramme de directivité d'antenne (104-1) pour une première région de la cellule et un second diagramme de directivité d'antenne (104-2) pour une seconde région de la cellule, dans lequel la première région et la seconde région de la cellule ont toutes deux la même répartition d'informations d'identifiant de cellule avec des transferts entre la première et la seconde région de la cellule, l'appareil (100 ; 300) comprenant :
un émetteur/récepteur (106) pouvant fonctionner pour émettre ou recevoir un premier signal vers ou depuis un terminal mobile (200) associé à la cellule par le biais du premier diagramme de directivité d'antenne (104-1) et pouvant fonctionner pour émettre ou recevoir un second signal vers ou depuis ledit terminal mobile (200) associé à la cellule par le biais du second diagramme de directivité d'antenne (104-2) ; et
un classificateur (108) pouvant fonctionner pour classifier le terminal mobile (200) sur la base d'une évaluation de canal sans fil utilisant le premier et le second signal, quant à savoir si le terminal mobile (200) peut être associé à la première région de la cellule ou si le terminal mobile (200) peut être associé à la seconde région de la cellule.

2. Appareil (10 ; 300) selon la revendication 1, dans lequel l'émetteur/récepteur (106) peut fonctionner pour émettre un premier signal de référence associé à un premier port d'antenne vers le terminal mobile (200) au moyen du premier diagramme de directivité d'antenne (104-1) et pour émettre un second signal de référence associé au premier ou à un second port d'antenne vers le terminal mobile (200) au moyen du second diagramme de directivité d'antenne (104-2), et dans lequel le classificateur (108) peut fonctionner pour classifier le terminal mobile (200) sur la base d'un premier retour fourni par le terminal mobile (20) en réponse au premier signal de référence émis et d'un second retour fourni par le terminal mobile (20) en réponse au second signal de référence émis.

3. Appareil (10 ; 300) selon la revendication 1, dans lequel l'émetteur/récepteur (106) peut fonctionner pour recevoir un premier signal reçu depuis le terminal mobile (200) par le biais du premier diagramme de directivité d'antenne (104-1) et pour recevoir un second signal reçu depuis le terminal mobile (200) par le biais du second diagramme de directivité d'antenne (104-2), et dans lequel le classificateur (108) peut fonctionner pour classifier le terminal mobile (200) sur la base d'une première évaluation de canal sans fil au moyen du premier signal reçu et d'une seconde évaluation de canal sans fil au moyen du second signal reçu.

4. Appareil (100 ; 300) selon la revendication 2, dans lequel les premier et second signaux de référence sont associés au même port d'antenne, et dans lequel l'émetteur/récepteur (106) peut fonctionner pour émettre le premier signal de référence au moyen du premier diagramme de directivité d'antenne (104-1) pendant un premier intervalle temporel et pour émettre le second signal de référence au moyen du second diagramme de directivité d'antenne (104-2) pendant un second intervalle temporel, dans lequel les premier et second intervalles temporels sont différents l'un de l'autre.

5. Appareil (100 ; 300) selon la revendication 2, dans lequel les premier et second diagrammes de directivité d'antenne (104-1 ; 104-2) sont configurés de telle sorte qu'un premier lobe principal ou lobe latéral du premier diagramme de directivité d'antenne (104-1) et qu'un second lobe principal ou lobe latéral du second diagramme de directivité d'antenne (104-2) présentent des régions se chevauchant, dans lequel les premier et second signaux de référence sont associés au même port d'antenne, et dans lequel l'émetteur/récepteur (106) peut fonctionner pour transmettre simultanément les premier et second signaux de référence par le biais des premier et second diagrammes de directivité d'antenne (104-1 ; 104-2) pendant des intervalles temporels de transmission configurables.

6. Appareil (100; 300) selon la revendication 2, dans lequel le premier signal de référence est associé à un premier port d'antenne, dans lequel le second signal de référence est associé à un second port d'antenne, et dans lequel l'émetteur/récepteur peut fonctionner pour émettre simultanément le premier signal de référence par le biais d'une première interface de signal d'antenne (102-1) associée au premier diagramme de directivité d'antenne (104-1) et le second signal de référence par le biais d'une seconde interface de signal d'antenne (102-2) associée au second diagramme de directivité d'antenne (104-2).

7. Appareil (100 ; 300) selon la revendication 6, comprenant en outre :
un configurateur (110) pouvant fonctionner pour signaler des informations de configuration (204) audit terminal mobile (200), les informations de configuration indiquant un premier et un second, différent, intervalles temporels, et indiquant que le premier intervalle temporel doit être utilisé par le terminal mobile (200) pour effectuer une évaluation d'état de canal au moyen du premier signal de référence et que le second intervalle temporel doit être utilisé par le terminal mobile (200) pour effectuer une évaluation d'état de canal au moyen du second signal de référence.

8. Appareil (100 ; 300) selon la revendication 1, dans lequel le premier diagramme de directivité d'antenne (104-1) présente une inclinaison vers le bas différente de celle du second diagramme de directivité d'antenne (104-2), de sorte que le premier diagramme de directivité d'antenne (104-1) desserve une région centrale de la cellule et que le second diagramme de directivité d'antenne (104-2) desserve une région périphérique de la cellule, ou vice-versa.

9. Appareil (100 ; 300) selon la revendication 2, dans lequel les premier et second signaux de référence sont des signaux de référence en liaison descendante spécifiques à la cellule qui permettent au terminal mobile (200) d'estimer des informations d'état de canal relatives à un premier canal sans fil affecté par le premier diagramme de directivité d'antenne (104-1) entre la station de base et ledit terminal mobile (200) et d'estimer des informations d'état de canal relatives à un second canal sans fil affecté par le second diagramme de directivité d'antenne (104-2) entre la station de base et ledit terminal mobile (200).

10. Appareil (100; 300) selon la revendication 1, dans lequel le système d'antenne (101 ; 310) comprend un réseau d'antenne comprenant une pluralité d'éléments d'antenne, et dans lequel le réseau d'antenne est couplé à la station de base par le biais d'au moins une première interface de signal d'antenne (102-1) et par le biais d'au moins une seconde interface de signal d'antenne (102-2), dans lequel les premier et second diagrammes de directivité d'antenne (104-1 ; 104-2) sont réalisés en appliquant des premier et second vecteurs de poids de formation de faisceau aux signaux passant par ladite première et/ou ladite seconde interface de signal d'antenne (102-1 ; 102-2), respectivement.

11. Appareil (100 ; 300) selon la revendication 1, dans lequel l'émetteur/récepteur (106) peut fonctionner pour, après la classification du terminal mobile (200), communiquer avec le terminal mobile (200) à l'aide soit du premier diagramme de directivité d'antenne (104-1), soit du second diagramme de directivité d'antenne (104-2), en fonction de si le terminal mobile (200) a été associé à la première région de la cellule ou si le terminal mobile (200) a été associé à la seconde région de la cellule.

12. Appareil (100 ; 300) selon la revendication 2, dans lequel les premier et second signaux de référence sont respectivement des signaux de référence d'informations d'état de canal, CSI-RS.

13. Appareil (100; 300) selon la revendication 1, dans lequel le système de communication sans fil est un système de communication d'évolution à long terme, LTE.

14. Procédé, pour une station de base desservant une cellule d'un système de communication sans fil, d'association d'un terminal mobile à une région d'une cellule, dans lequel la station de base peut être couplée à un système d'antenne (101 ; 310) pouvant fonctionner pour produire un premier diagramme de directivité d'antenne (104-1) pour une première région de la cellule et un second diagramme de directivité d'antenne (104-2) pour une seconde région de la cellule, dans lequel la première région et la seconde région de la cellule ont toutes deux la même répartition d'informations d'identifiant de cellule avec des transferts entre la première et la seconde région de la cellule, le procédé comprenant les étapes suivantes :
émettre ou recevoir un premier signal vers ou depuis le terminal mobile (200) associé à la cellule par le biais du premier diagramme de directivité d'antenne (104-1) ;
émettre ou recevoir un second signal vers ou depuis le terminal mobile (200) associé à la cellule par le biais du second diagramme de directivité d'antenne (104-2) ;
classifier le terminal mobile (200), sur la base d'une évaluation de canal sans fil utilisant les premier et second signaux, quant à savoir si terminal mobile (200) peut être associé à la première région de la cellule ou si le terminal mobile (200) peut être associé à la seconde région de la cellule.

15. Programme informatique comprenant un code de programme pour exécuter le procédé selon la revendication 14, lorsque le programme informatique est exécuté sur un dispositif matériel programmable.
